# EUROPEAN PATENT APPLICATION

(11) **EP 3 024 203 A1**
(43) Date of publication of application: **25.05.2016**
(21) Application number: 15195147.2
(22) Date of filing: 18.11.2015
(51) Int. Cl.: H04M 1/18, H04B 1/3888, G06F 1/16, H04M 1/02

(54) **PROTECTOR FOR MOBILE ELECTRONIC DEVICE**

(30) Priority: 21.11.2014 KR 20140008558 U
(71) Applicant: Whitestone Co., Ltd., Chungcheongnam-do 331-980 (KR)
(72) Inventor: Seo, Kyung Lim, 463-850 Gyeonggi-do (KR); Min, Hye Sook, 463-864 Gyeonggi-do (KR)
(74) Representative: Beetz & Partner mbB

(57) **Abstract**

There is provided a protector for a mobile electronic device that can effectively protect the entire of a rounded screen and prevent deterioration of aesthetic appearance by having both of a plane protection unit that protects the plane of the rounded screen and an edge protection unit that protect edges of the screen. The protector for a mobile electronic device including a screen with rounded edges and a body on which the screen is mounted includes: a plane protection unit mounted on the screen to protect a plane of the screen and made of a transparent material; and an edge protection unit combined with the plane protection unit and mounted on the screen, and formed in a closed rectangular ring shape to protect edges of the screen.

## Description

### CROSS-REFERENCE TO RELATED APPLICATION

This application claims the benefit of Korean Utility Model Application No. 20-2014-0008558 filed on November 21, 2014 with the Korean Intellectual Property Office, the disclosure of which is incorporated herein by reference.

### BACKGROUND OF THE INVENTION

### 1. Field of the Invention

The present invention relates to a protector for a mobile electronic device, and more particularly, to a protector for an electronic device that can effectively protect the screen of electronic devices such as a smartphone, when the screen is rounded.

### 2. Description of the Related Art

Recently, the market of accessories for smartphones has rapidly expanded with an increasing demand for smartphones.

A case for protecting the body of smartphones and a film or a glass protector for protecting the screen of smartphones account for most part of the smartphone accessories.

The main purpose of the existing smartphone cases is to protect the body of smartphones from scratching or shock, so users have to purchase a screen protector in order to protect the screen of smartphones.

On the other hand, recently, it has been attempted to give specific designs to smartphones and, as an attempt for new designs, products with screens having rounded edges, not a simple flat shape, has been released.

However, when the existing screen protectors are used to protect those rounded screens, the protectors come off the rounded edges, and when the size of screen protectors to preventing coming-off at the edges, the aesthetic appearance is deteriorated.

### [Prior Art Document]

[Patent Document 0001] Korean Patent Application Publication No. 10-2012-0083835

### SUMMARY OF THE INVENTION

An object of the present invention is to provide a protector for a mobile electronic device that can effectively protect the entire of a rounded screen without deteriorating the aesthetic appearance because it has a plane protection unit for protecting the plane of a rounded screen and an edge protection unit for protecting edges.

Further, another object of the present invention is to provide a protector for a mobile electronic device that can reduce a burden of additional purchase on users because it has a body protector expanding from an edge protection unit to be able to protect both of the screen and the body of a mobile electronic device.

According to an aspect of the present invention, a protector for a mobile electronic device including a screen with rounded edges and a body on which the screen is mounted includes: a plane protection unit mounted on the screen to protect a plane of the screen and made of a transparent material; and an edge protection unit combined with the plane protection unit and mounted on the screen, and formed in a closed rectangular ring shape to protect edges of the screen.

The protector may further include a body protection unit extending from the edge protection unit and protecting a body of the mobile electronic device.

The protector may further include a back protection member for protecting the back of the body of the mobile electronic device.

Coupling portions of the plane protection unit and the edge protection unit may be stepped.

Grooves and protrusions may be formed at coupling portions of the plane protection unit and the edge protection unit.

The plane protection unit may be made of glass or transparent synthetic resin.

The edge protection unit may be made of synthetic resin or a metal.

The protector may further include a bumper member protecting the body of the mobile electronic device.

According to the protectors for a mobile electronic device, since a plane protection unit for protecting the plane of a rounded screen and an edge protection unit for protecting edges are both provided, the entire rounded screen can be protected and the aesthetic appearance can not be deteriorated.

Further, since the body protection unit extending from the edge protection unit is further provided, it is possible to protect both of the screen and the body of a mobile electronic device, so it is possible to reduce a burden of additional purchase on users.

### BRIEF DESCRIPTION OF THE DRAWINGS

FIG. 1 is a view illustrating a protector for a mobile electronic device according to a first embodiment of the present invention and a mobile electronic device.
FIG. 2 is a view illustrating the mobile electronic device according to a first embodiment of the present invention and a mobile electronic device, in which the protector for a mobile electronic device is divided into a plane protection unit and an edge protection unit.
FIG. 3 is a view illustrating the protector for a mobile electronic device according to the first embodiment of the present invention which is combined with a mobile electronic device.
FIG. 4 is a side cross-sectional view illustrating the protector for a mobile electronic device according to a first embodiment of the present invention which is combined with a mobile electronic device, in which an embodiment of the coupling structure of the plane protection unit and the edge protection unit of the protector for a mobile electronic device is illustrated.
FIG. 5 is a side cross-sectional view illustrating the protector for a mobile electronic device according to a first embodiment of the present invention which is combined with a mobile electronic device, in which another embodiment of the coupling structure of the plane protection unit and the edge protection unit of the protector for a mobile electronic device is illustrated.
FIG. 6 is a view illustrating a protector for a mobile electronic device according to a second embodiment of the present invention and a mobile electronic device.
FIG. 7 is a view illustrating the protector for a mobile electronic device according to the second embodiment of the present invention which is combined with the mobile electronic device.
FIG. 8 is a view illustrating a back protection member that is additionally applied to the protector for a mobile electronic device according to the first embodiment or the second embodiment of the present invention and a mobile electronic device.
FIG. 9 is a side cross-sectional view illustrating the protector for a mobile electronic device according to the first embodiment of the present invention, which is combined with the mobile electronic device and is further equipped with a back protection member.
FIG. 10 is a side cross-sectional view illustrating the protector for a mobile electronic device according to the first embodiment of the present invention, which is combined with the mobile electronic device and is further equipped with a back protection member.

### DETAILED DESCRIPTION OF THE PREFERRED EMBODIMENTS

Hereinafter, exemplary embodiments of the present invention are described in detail with reference to the accompanying drawings.

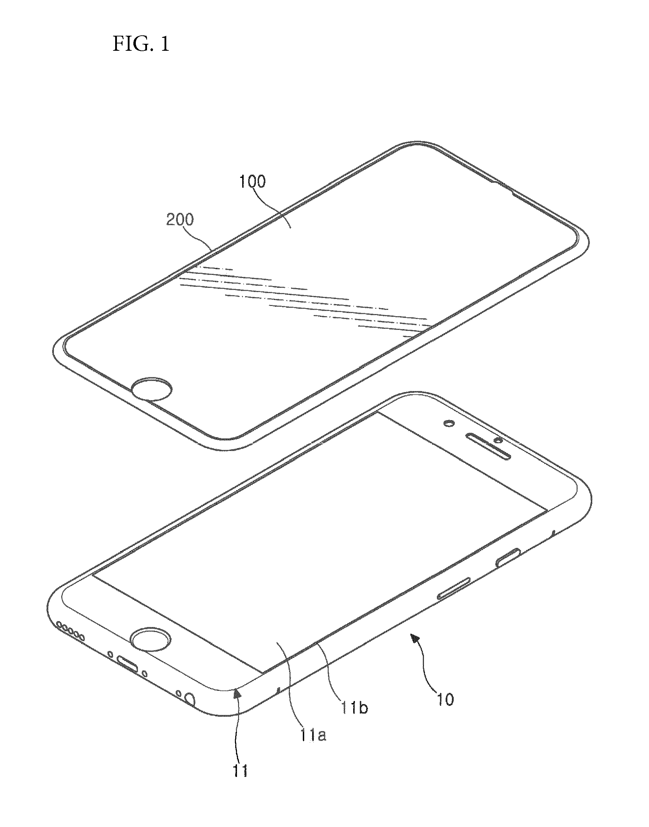

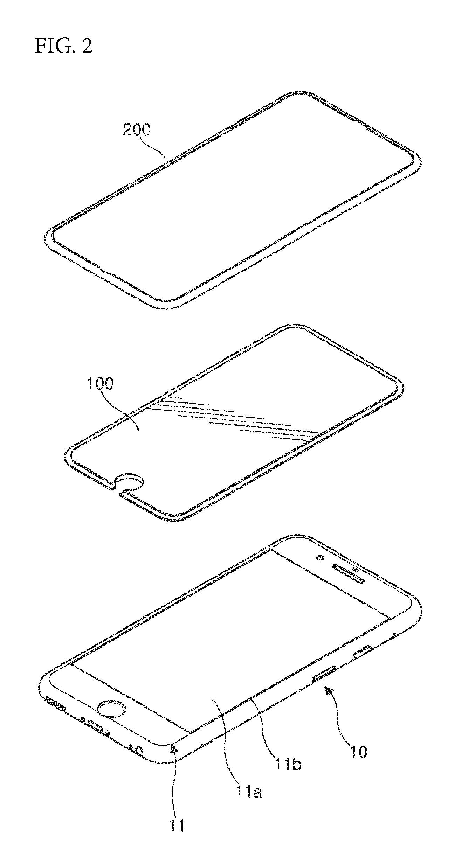

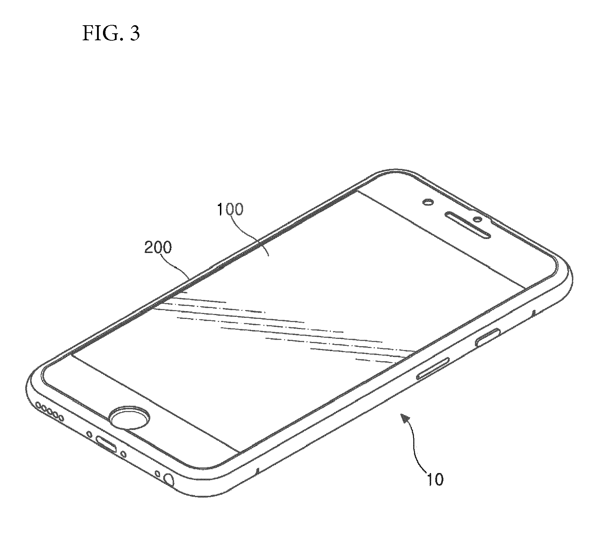

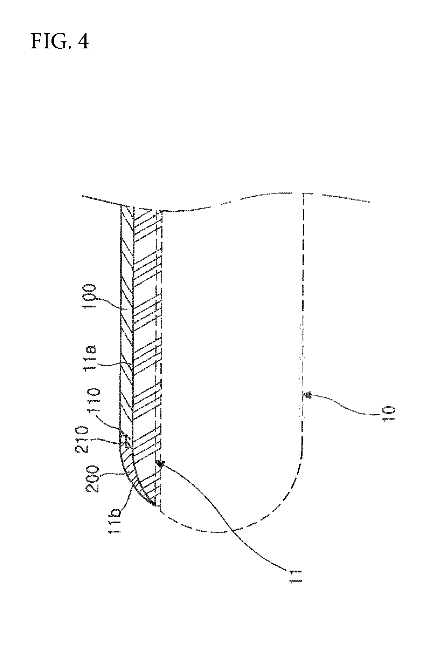

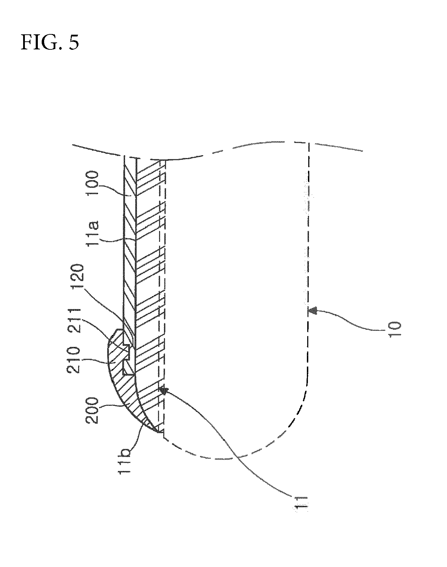

FIG. 1 is a view illustrating a protector for a mobile electronic device according to a first embodiment of the present invention and a mobile electronic device, FIG. 2 is a view illustrating the mobile electronic device according to a first embodiment of the present invention and a mobile electronic device, in which the protector for a mobile electronic device is divided into a plane protection unit and an edge protection unit, FIG. 3 is a view illustrating the protector for a mobile electronic device according to the first embodiment of the present invention which is combined with a mobile electronic device, FIG. 4 is a side cross-sectional view illustrating the protector for a mobile electronic device according to a first embodiment of the present invention which is combined with a mobile electronic device, in which an embodiment of the coupling structure of the plane protection unit and the edge protection unit of the protector for a mobile electronic device is illustrated, and FIG. 5 is a side cross-sectional view illustrating the protector for a mobile electronic device according to a first embodiment of the present invention which is combined with a mobile electronic device, in which another embodiment of the coupling structure of the plane protection unit and the edge protection unit of the protector for a mobile electronic device is illustrated.

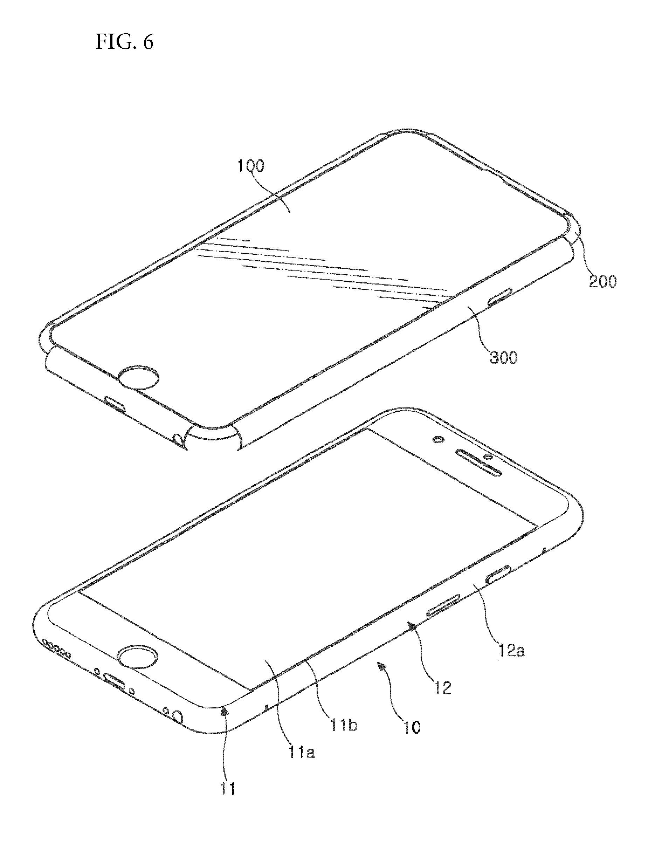

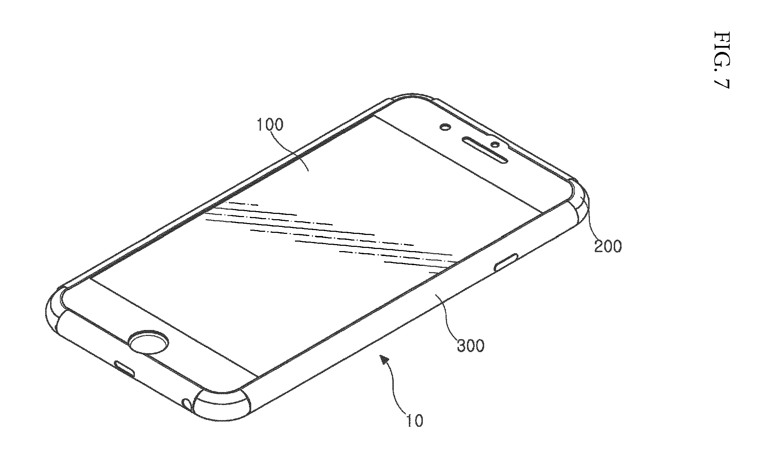

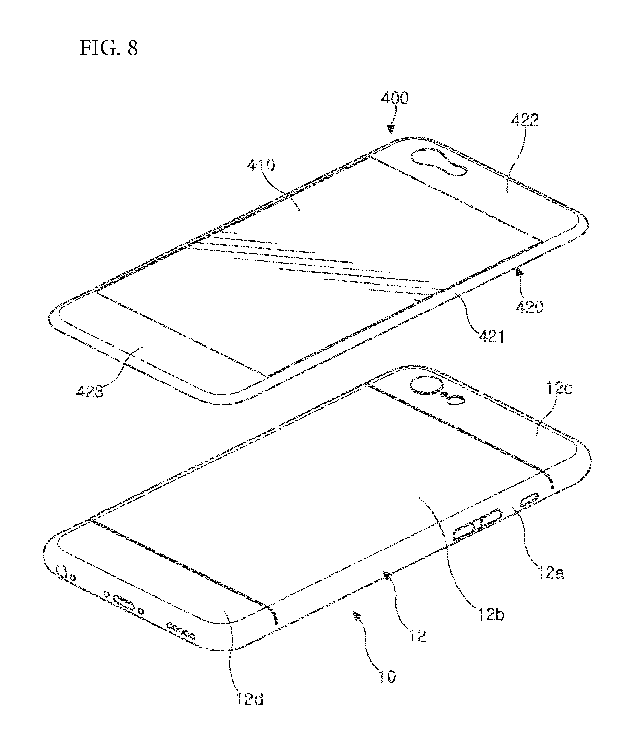

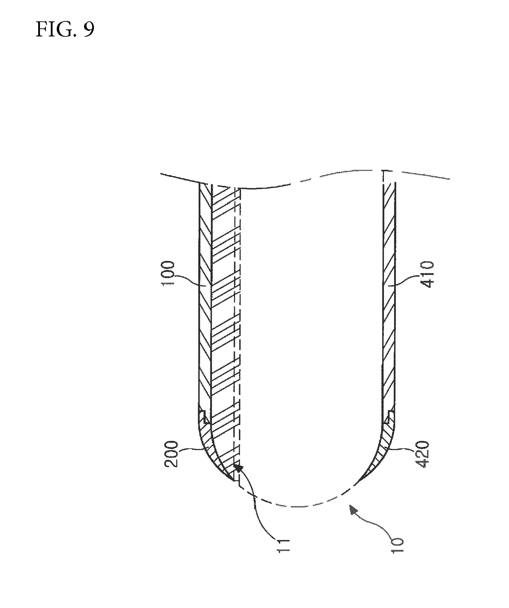

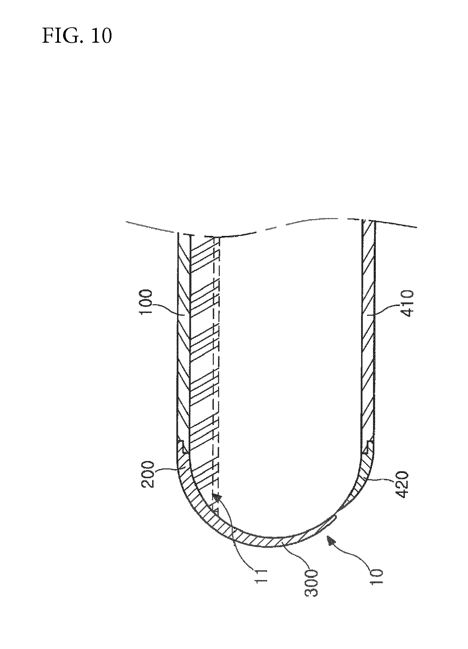

FIG. 6 is a view illustrating a protector for a mobile electronic device according to a second embodiment of the present invention and a mobile electronic device, FIG. 7 is a view illustrating the protector for a mobile electronic device according to the embodiment of the present invention which is combined with the mobile electronic device, FIG. 8 is a view illustrating a back protection member that is additionally applied to the protector for a mobile electronic device according to the first embodiment or the second embodiment of the present invention and a mobile electronic device, FIG. 9 is a side cross-sectional view illustrating the protector for a mobile electronic device according to the first embodiment of the present invention, which is combined with the mobile electronic device and is further equipped with a back protection member, and FIG. 10 is a side cross-sectional view illustrating the protector for a mobile electronic device according to the first embodiment of the present invention, which is combined with the mobile electronic device and is further equipped with a back protection member.

Referring to FIGS. 1 to 5 and partially referring to FIGS. 6 to 10, a protector for a mobile electronic device according to a first embodiment of the present invention is a protector including a screen 11 with rounded edges 11b and a body 12 on which the screen 11 is mounted includes a plane protection unit 100 and an edge protection unit 200.

The plane protection unit 100, which is mounted on the screen 11 of the mobile electronic device 10 to protect the plane 11a of the screen 11, may be made of a transparent material so that the information displayed by the liquid crystals in the mobile electronic device 10 can be shown to the outside and a touch type generally used for the liquid crystals of the mobile electronic device 10 can be used. Accordingly, the plane protection unit 100 may be made of various materials such as film, glass, synthetic resin, and ceramic, but glass that satisfies high clearness, touch response, and strength may be preferable.

Further, an adhesive layer (not illustrated) may be further formed at a portion, which is brought in contact with the plane 11a of the screen 11, of a side of the plane protection unit 100.

The edge protection unit 200, which is combined with the plane protection unit 100 and mounted on the screen 11 to protect the edges 11b of the screen 11, may be made of a closed rectangular ring shape to correspond to the entire shape of the edges of the screen 11.

Meanwhile, the edge protection unit 200 may be made of various materials such as synthetic resin, a metal and an adhesive layer (not illustrated) may be further formed at the portion that is brought in contact with the edges 11b of the screen 11.

Meanwhile, the plane protection unit 100 and the edge protection unit 200 may be combined with each other in the process of manufacturing them, but they may be separated, as illustrated in FIG. 2. When the plane protection unit 100 and the edge protection unit 200 are separated, an adhesive member for fixing them may be added between them.

Meanwhile, stepped portion may be formed at the coupling portions of the plane protection unit 100 and the edge protection unit 200 to provide an integrated impression in the design, as illustrated in FIG. 4, regardless of whether the plane protection unit 100 and the edge protection unit 200 are combined in advance or separated. That is, an end 110 of the plane protection unit 100 may be stepped and a corresponding end 210 of the edge protection unit 200 may be stepped. In this configuration, it is possible to achieve an integrated impression in the entire desire by one curved line from the plane protection unit 100 to the edge protection unit 200.

Meanwhile, in order to prevent shock from the outside that may be applied to the plane protection unit 100, rather than to give the integrated impression in the design, as illustrated in FIG. 5, the edge protection unit 200 may protrude further than the plane protection unit 100. In this case, the stepping described above is not needed, and as illustrated in the figure, a coupling groove 120 may be formed at an end of the plane protection unit 200 and a corresponding coupling protrusion 211 may be formed at the end 210 of the edge protection unit 200.

On the other hand, the protector for a mobile electronic device according to the first embodiment, as illustrated in FIG. 8, may further include a back protection member 400 for protecting the back of the body 12 of the mobile electronic device 10.

The back protection member 400 includes a center protection member 410 for protecting the middle portion 12b of the back of the body 12 of the mobile electronic device 10 and an outside protection member 420 for protecting the upper portion 12c, the lower portion 12d, and the edges of the body 12 of the mobile electronic device 10.

The outside protection member 420 includes an edge protection portion 421, an upper protection portion 422, and a lower protection portion 423 that are formed, respectively, to correspond to the edges, upper portion 12c, and lower portion 12d of the back of the body 12 of the mobile electronic device 10.

The center protection member 410 and the outside protection member 420 may be fixed by bonding or may be integrally formed.

Meanwhile, FIG. 9 is a side cross-sectional view in which the back protection member 400 is combined with the mobile electronic device 10.

Hereafter, a protector for a mobile electronic device according to a second embodiment of the present invention is described with reference to FIGS. 6 to 10 and partially FIGS. 1 to 5.

A protector for a mobile electronic device according to the second embodiment of the present invention is partially the same as the first embodiment described above. That is, the protector fundamentally includes a plane protection unit 100 and an edge protection unit 200.

The protector for a mobile electronic device according to the second embodiment of the present invention, as illustrated in FIG.6 and FIG. 7, further includes a body protection unit 300 that extends from the edge protection unit 200 and protects the body 12 of the mobile electronic device 10. The body protection unit 300 has a shape corresponding to the sides 12a of the body 12 of the mobile electronic device 10.

Herein, the body protection unit 300 extends from the edge protection unit 200, but may be replaced with a specific bumper member that can protect the body 12 of the mobile electronic device 10. The bumper member may be formed in a ring shape to be able to continuously cover the sides 12a of the body 12 of the mobile electronic device 10.

On the other hand, the protector for a mobile electronic device according to the second embodiment, similar to the first embodiment described above, as illustrated in FIG. 8, may further include a back protection member 400 for protecting the back of the body 12 of the mobile electronic device 10.

The back protection member 400 includes a center protection member 410 for protecting the middle portion 12b of the back of the body 12 of the mobile electronic device 10 and an outside protection member 420 for protecting the upper portion 12c, the lower portion 12d, and the edges of the body 12 of the mobile electronic device 10.

The outside protection member 420 includes an edge protection portion 421, an upper protection portion 422, and a lower protection portion 423 that are formed, respectively, to correspond to the edges, upper portion 12c, and lower portion 12d of the back of the body 12 of the mobile electronic device 10.

The center protection member 410 and the outside protection member 420 may be fixed by bonding or may be integrally formed.

Meanwhile, FIG. 10 is a side cross-sectional view in which the back protection member 400 is combined with the mobile electronic device 10.

According to the protectors for a mobile electronic device of the embodiments of the present invention, since a plane protection unit for protecting the plane of a rounded screen and an edge protection unit for protecting edges are both provided, the entire rounded screen can be protected and the aesthetic appearance can not be deteriorated. Further, since the body protection unit extending from the edge protection unit is further provided, it is possible to protect both of the screen and the body of a mobile electronic device, so it is possible to reduce a burden of additional purchase on users.

Although specific embodiments of the present invention were described with reference to drawings, it should be understood that the present invention may be changed and modified in various ways by those skilled in the art without departing from the spirit and scope of the present invention described in the following claims.

## Claims

1. A protector for a mobile electronic device including a screen with rounded edges and a body on which the screen is mounted, the protector comprising:
a plane protection unit mounted on the screen to protect a plane of the screen and made of a transparent material; and
an edge protection unit combined with the plane protection unit and mounted on the screen, and formed in a closed rectangular ring shape to protect edges of the screen.

2. The protector of claim 1, further comprising a body protection unit extending from the edge protection unit and protecting a body of the mobile electronic device.

3. The protector of claim 1 or 2, further comprising a back protection member for protecting the back of the body of the mobile electronic device.

4. The protector of claim 3, wherein coupling portions of the plane protection unit and the edge protection unit are stepped.

5. The protector of claim 3, wherein grooves and protrusions are formed at coupling portions of the plane protection unit and the edge protection unit in conjunction with each other.

6. The protector of claim 1 or 2, wherein the plane protection unit is made of glass or transparent synthetic resin.

7. The protector of claim 1 or 2, wherein the edge protection unit is made of synthetic resin or a metal.

8. The protector of claim 1, further comprising a bumper member protecting the body of the mobile electronic device.
